# EUROPÄISCHE PATENTSCHRIFT

(11) **EP 3 859 194 B1**
(45) Veröffentlichungstag und Bekanntmachung des Hinweises auf die Patenterteilung: **27.03.2024**
(21) Anmeldenummer: 20154745.2
(22) Anmeldetag: 30.01.2020
(51) Int. Cl.: F16J 15/12, B29C 45/26, F16L 23/18, F16L 25/00, F16J 15/06, F16J 15/3232

(54) **DICHTELEMENT FÜR EINE KÜHLMITTELVERBINDUNG ZWISCHEN ZWEI WERKZEUGBAUTEILEN EINES WERKZEUGS UND VERFAHREN ZUR INSTANDHALTUNG DIESES WERKEZEUGS**
SEALING ELEMENT FOR A COOLANT CONNECTION BETWEEN TWO TOOL COMPONENTS OF A TOOL AND METHOD FOR MAINTAINING THIS TOOL
ÉLÉMENT D'ÉTANCHÉITÉ POUR UN RACCORDEMENT D'AGENT RÉFRIGÉRANT ENTRE DEUX PARTIES D'UN OUTIL ET PROCÉDÉ D'ENTRETIEN DUDIT OUTIL

(43) Veröffentlichungstag der Anmeldung: 04.08.2021
(73) Patentinhaber: Haidlmair Holding GmbH, 4542 Nussbach (AT)
(72) Erfinder: Eckhart, Christian, 4560 Kirchdorf (AT)
(74) Vertreter: Jell, Friedrich

(56) Entgegenhaltungen:
- DE-A1- 2 550 878
- DE-A1- 19 507 736
- DE-U1- 8 528 695
- DE-U1-202014 001 538
- US-B1- 6 419 237

## Beschreibung

Die Erfindung betrifft ein Dichtelement für eine Kühlmittelverbindung zwischen zwei Werkzeugbauteilen eines Werkzeugs sowie ein Werkzeug hiermit, sowie ein Verfahren zur Instandhaltung der Kühlmittelverbindung.

Um Kühlmittelkanäle zwischen zwei Platten als Werkzeugbauteile eines Werkzeugs, nämlich Spritzgusswerkzeugs, miteinander dicht zu verbinden, wird im Stand der Technik ein Dichtelement verwendet (vgl. DE202014001538U1). Gemeinsam ist diesen Dichtelementen ein Trägerelement mit einer Durchgangsbohrung zur Kühlmittelverbindung und einer Ringnut, welche die Durchgangsbohrung umläuft und eine Ringdichtung des Dichtelements trägt, um so die Durchgangsbohrung zum anderen Werkzeugbauteil abzudichten. Tritt am Dichtelement jedoch beispielsweise eine korrosionsbedingte Undichte auf, reicht es oftmals nicht aus, die Ringdichtung am Dichtelement auszutauschen. Das mit dem einen Werkzeugbauteil verpresste Dichtelement muss daher etwa zusätzlich auftragsgeschweißt und/oder nachbearbeitet werden, um die gewünschten Abmessungen für einen dichten Abschluss zwischen den beiden Werkzeugbauteilen zu gewährleisten. Solch ein Vorgang ist vergleichsweise aufwendig und kostenintensiv - nicht zuletzt aufgrund langer Stillstandszeiten des Werkzeugs.

Die Erfindung hat sich daher die Aufgabe gestellt, ein Dichtelement der eingangs geschilderten Art, derart zu verändern, dass durch dieses die Stillstandszeiten verkürzen werden können. Zudem soll das Dichtelement kostengünstig herstellbar sein und eine besonders handhabungsfreundliche Überholung des Werkzeugs ermöglichen - dies auch dann, wenn das Werkzeugbauteil ein konstruktiv unterschiedliches Dichtelement aufweist.

Die Erfindung löst die gestellte Aufgabe durch die Merkmale des Anspruchs 1.

Ist das Trägerelement im Querschnitt kreisringförmig ausgebildet, ist dieses nicht nur verhältnismäßig einfach herzustellen, aufgrund der kreisrunden Form der Außenabmessungen eröffnet sich auch die Möglichkeit, damit ein am Werkzeugbauteil festsitzendes Dichtelement auf relativ einfache Weise zu ersetzen. Beispielsweise, indem das ursprünglich vorgesehene Dichtelement ausgefräst und am Werkzeugbauteil derart eine zylindrische Vertiefung zum Einsetzen des erfindungsgemäßen Dichtelements geschaffen wird.

Dies gefährdet jedoch nicht den flüssigkeitsdichten Anschluss an den beiden Werkzeugbauteilen. Das Trägerelement weist nämlich erfindungsgemäß eine an der ersten Stirnseite vorgesehene erste Ringnut und eine an der zweiten Stirnseite und an der Schmalseite vorgesehene zweite Ringnut auf, wobei die erste Ringdichtung eine erste Ringdichtung, und die zweite Ringnut eine zweite Ringdichtung umfasst.

Mithilfe der ersten Ringdichtung wird somit ein flüssigkeitsdichter Anschluss an ein erstes Werkzeugbauteil und mithilfe der zweiten Ringdichtung ein flüssigkeitsdichter Anschluss an ein anderes zweites Werkzeugbauteil ermöglicht.

Das erfindungsgemäße Dichtelement erlaubt daher eine vergleichsweise handhabungsfreundliche Überholung des Werkzeugs und kann sohin die Stillstandszeit des Werkzeugs im Falle eines Servicevorganges etc. erheblich reduzieren.

Kompakte Abmessungen am Dichtelement sind erreichbar, wenn das Trägerelement scheibenförmig ausgebildet ist.

Eine vergleichsweise hohe Dichtwirkung kann erreicht werden, wenn zwischen der Durchgangsöffnung und der ersten Ringnut ein Steg vorgesehen ist, der plan an die erste Stirnseite anschließt. Auf diese Weise ist es möglich, die Ringdichtung vergleichsweise nahe an die Durchgangsöffnung heranzuführen, trotzdem aber eine gleichmäßige Abstützung der Ringdichtung gewährleistet bleiben. Das Dichtelement kann daher auch bei vergleichsweise hohen Drücken ein sicheres Anliegen der Ringdichtung an der Dichtfläche am anderen Werkzeugbauteil gewährleisten - und so die Standfestigkeit des Werkzeugs erhöhen.

Die axiale Längserstreckung des Dichtelements kann auf ein kompaktes Maß begrenzt werden, wenn der erste Nutgrund der ersten Ringnut und der zweite Nutgrund der zweiten Ringnut quer zur Axialrichtung des Trägerelements zueinander versetzt angeordnet sind. Damit können aber auch die Nuten unabhängiger voneinander am Trägerelement vorgesehen werden, was zu einem ausgewogenen Maß an Festigkeit und Materialaufwand führen kann.

Vorzugsweise ist die Summe der maximalen Höhen der beiden Ringdichtungen größer als die axiale Längserstreckung des Trägerelements, um derart auch bei Bauteiltoleranzen standfeste Dichtflächen mit den Werkzeugbauteilen sicherzustellen

Erfindungsgemäß - da unter anderem vergleichsweise kostengünstig - sind die erste Ringdichtung und die zweite Ringdichtung als O-Ring ausgebildet.

Die Standfestigkeit des Dichtelements kann weiter erhöht werden, wenn das Trägerelement einen, insbesondere korrosionsbeständigen, Metallwerkstoff aufweist.

Vorzugsweise eignet sich das erfindungsgemäße Dichtelement bei einem Werkzeug, insbesondere Spritzgusswerkzeug, mit mindestens zwei Werkzeugbauteile und mit einer Kühlmittelverbindung zwischen den beiden Werkzeugbauteilen, wobei die Kühlmittelverbindung das erfindungsgemäße Dichtelement aufweist.

Die Ringnut schließt im Querschnitt unter einem spitzen Winkel α an eine Kante der zweiten Stirnseite an. Dies verhindert, ein unbeabsichtigtes Lösen der zweiten Ringdichtung von der zweiten Ringnut, was die Handhabung des Dichtelements erleichtert.

Vorzugsweise beträgt hierzu der Winkel α von 30 bis 80 Grad.

Die Erfindung hat sich außerdem die Aufgabe gestellt, ein Verfahren zur Instandhaltung einer Kühlmittelverbindung zwischen zwei Werkzeugbauteilen in der Handhabung zu erleichtern. Außerdem soll damit die Instandhaltung bzw. Überholung des Werkzeugs schneller möglich sein.

Die Erfindung löst die gestellte Aufgabe durch die Merkmale des Anspruchs 10.

Wird das erfindungsgemäße Dichtelement bei der Instandhaltung einer Kühlmittelverbindung zwischen zwei Werkzeugbauteilen verwendet, indem an einer zylindrischen Vertiefung an einem Kühlmittelkanal eines Werkzeugbauteils das Dichtelement vorgesehen wird, wird ein besonders schnelles und handhabungsfreundliches Verfahren zur Verfügung gestellt.

Insbesondere kann das erfindungsgemäße Dichtelement auch nachträglich bei Werkzeugen versehen werden - beispielsweise, indem an einem Werkzeugbauteil die zylindrische Vertiefung, insbesondere mithilfe eines spanenden Trennverfahrens, vorgesehen wird.

In den Figuren ist beispielsweise der Erfindungsgegenstand anhand einer Ausführungsvariante näher dargestellt. Es zeigen
Fig. 1 eine geschnittene Teilansicht zu einem Werkzeug mit einem Dichtelement,
Fig. 2 eine Schnittansicht des Dichtelements nach Fig. 1 und
Fig. 3 eine Draufsicht auf das Dichtelement nach Fig. 2.

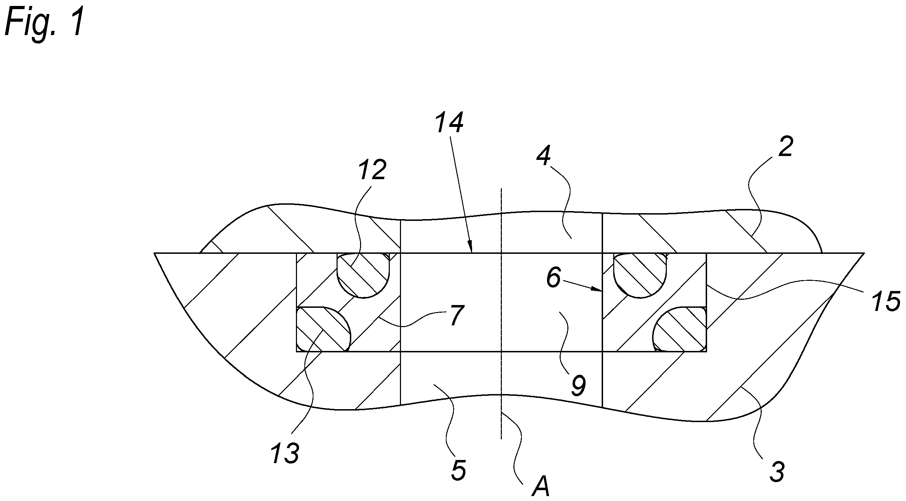

Nach Fig. 1 wird beispielsweise ein als Spritzgusswerkzeug ausgeführtes Werkzeug 1 dargestellt, das ein erstes Werkzeugbauteil 2 und ein zweites Werkzeugbauteil 3 aufweist, welche Platten des Spritzgusswerkzeugs darstellen. Das erste und das zweite Werkzeugbauteil 2, 3 weisen je einen Kühlmittelkanal 4, 5 auf, welche beiden Kanäle 4, 5 über ein Dichtelement 6 miteinander verbunden sind.

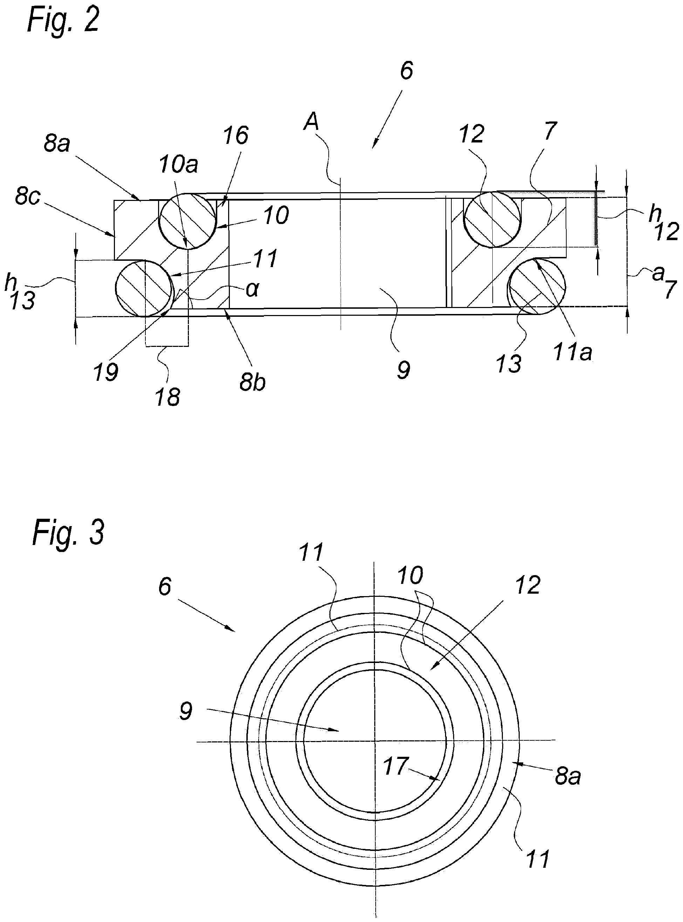

Das nach Fig. 2 und 3 im Detail dargestellte Dichtelement 6 umfasst ein Trägerelement 7 mit zwei einander gegenüberliegenden Stirnseiten 8a, 8b - und zwischen diesen Stirnseiten 8a, 8b mindestens eine Schmalseite 8c. Wie in den Figuren zu erkennen, sind beide Stirnseiten 8a, 8b eben und die Schmalseite 8c zylindrisch beispielsweise ausgeführt.

Im Trägerelement 7 ist eine, von der ersten zur zweiten Stirnseite 8a, 8b verlaufende, kreisrunde Durchgangsbohrung 9 vorgesehen, welche die beiden Kühlmittelkanäle 4, 5 miteinander verbindet. Außerdem weist dieses Trägerelement 7 Ringnuten 10, 11 auf, welche die Durchgangsbohrung 9 jeweils umlaufen - wie in Fig. 3 zu erkennen. An der Ringnut 10, 11 ist eine Ringdichtung 12, 13 des Dichtelements 6 vorgesehen, welche die Kühlmittelverbindung 14 zwischen den beiden Kühlmittelkanälen 4, 5 abdichtet.

Erfindungsgemäß ist das Trägerelement 7 im Querschnitt kreisringförmig ausgebildet - wie in Fig. 3 erkennbar. Durch diese Form ergeben sich bei der Handhabung des Dichtelements 6 erhebliche Vorteile. Einerseits kann das Dichtelement 6 in eine Vertiefung 15 leicht eingesetzt werden, andererseits kann dieses Dichtelement 6 als Ersatz für ein konstruktiv anders ausgeführtes Dichtelement verwendet werden. Hierzu ist lediglich das zweite Werkzeugbauteil 3 mit einer entsprechenden Ausnehmung 15 zu versehen - beispielsweise mithilfe eines spanenden Trennverfahrens mit einem Schneidwerkzeug, beispielsweise Fräswerkzeug, was verhältnismäßig einfach und schnell durchgeführt werden kann. Die Stillstandszeiten eines zu überholenden Werkzeugs 1 sind dadurch erheblich reduziert.

Zudem garantiert das Dichtelement 6 einen besonders dichten Anschluss an das jeweilige Werkzeugbauteil 2, 3. Hierzu ist weist das Trägerelement 7 sowohl eine erste Ringnut 10 als auch eine zweite Ringnut 11 auf.

Die erste Ringnut 10 ist an der ersten Stirnseite 8a vorgesehen und weist die erste Ringdichtung 12 auf, welche Ringdichtung 12 beispielsweise als O-Ring ausgeführt ist. Dies stellt einen dichten Anschluss des Dichtelements 6 an das erste Werkzeugbauteil 2 sicher.

Die zweite Ringnut 11 ist an der zweiten Stirnseite 8b und an der Schmalseite 8c vorgesehen und weist die zweite Ringdichtung 13 auf, welche beispielsweise ebenfalls als O-Ring ausgeführt ist. Dies stellt einen dichten Anschluss des Dichtelements 6 an das zweite Werkzeugbauteil 3 sicher.

Ein standfestes, kostengünstiges und einfach handhabbares Dichtelement 6 ist damit geschaffen - unter anderem auch durch die Ausführung der Ringdichtung 12, 13 als O-Ring.

Wie zudem in den Figuren 2 und 3 erkennbar, ist das Trägerelement 7 scheibenförmig ausgebildet, was zu einer äußerst kompakten Baugröße führt.

Ein Steg 16 am Trägerelement 7 erhöht zudem die Dichtwirkung des Dichtelements 6. Der Steg 16 ist zwischen der Durchgangsöffnung 9 und der ersten Ringnut 10 vorgesehen - und schließt an der ersten Stirnseite 8a an. Der Steg 16 dient damit zur Lagefixierung der ersten Ringdichtung 12, wodurch von der ersten Ringdichtung 12 selbst vergleichsweise hohe Kompressionskräfte standfest aufgenommen werden können.

Wie zudem in Fig. 2 erkennbar, umfasst das Trägerelement 7 einen Falz. Dort ist auch die zweite Ringnut 11 vorgesehen, welches Merkmal zu einer besonders dichten randseitigen Abdichtung zwischen Dichtelement 6 und zweitem Werkzeugbauteil 3 führt.

Indem der erste Nutgrund 10a der ersten Ringnut 10 und der zweite Nutgrund 11a der zweiten Ringnut 11 quer zur Axialrichtung A des Trägerelements 7 gesehen, um einen Abstand 18 versetzt am Trägerelement 7 angeordnet sind, kann die axiale Längserstreckung a7 des Trägerelements 7 sehr kompakt gehalten werden.

Insbesondere ermöglicht dies beispielsweise auch, dass die Summe der maximalen Höhen h13, h12 der beiden Ringdichtungen 12, 13 größer als die Länge a7 der axialen Erstreckung des Trägerelements 7 ist.

Vorzugsweise besteht das Trägerelement 7 aus einem korrosionsbeständigen Metallwerkstoff, beispielsweise Edelstahl.

Die Ringnut 11 schließt im Querschnitt unter einem spitzen Winkel α an eine Kante 19 der zweiten Stirnseite 8b an. Dieser Winkel α ergibt sich zwischen der Tangente des, an die Kante 19 anschließenden Endbereichs der Ringnut 11 und der zweiten Stirnseite 8b.

Dieser Verlauf der Ringnut 11 verhindert ein unbeabsichtigtes Lösen der zweiten Ringdichtung 13 von der zweiten Ringnut 11, was die Handhabung des Dichtelements erleichtert. Vorzugsweise beträgt hierzu der Winkel α von 30 bis 80 Grad, beträgt dieser 70 Grad wie dargestellt.

## Patentansprüche

1. Dichtelement für eine Kühlmittelverbindung (14) zwischen zwei Werkzeugbauteilen (2, 3) eines Werkzeugs, insbesondere Spritzgusswerkzeugs, welches Dichtelement (6) ein Trägerelement (7), das zwei einander gegenüberliegende Stirnseiten (8a, 8b) und zwischen diesen Stirnseiten (8a, 8b) mindestens eine Schmalseite (8c) außen aufweist, umfasst, wobei das Trägerelement (7) eine von seiner ersten zur zweiten Stirnseite (8a, 8b) verlaufende Durchgangsbohrung (9) zur Kühlmittelverbindung (14) und mindestens eine, die Durchgangsbohrung (9) umlaufende Ringnut (10, 11) aufweist, wobei am Trägerelement (7) mindestens eine Ringdichtung (12, 13) des Dichtelements (6) an der Ringnut (10, 11) vorgesehen ist, wobei das Trägerelement (7) im Querschnitt kreisringförmig ausgebildet ist, und dass das Trägerelement (7) eine an der ersten Stirnseite (8a) vorgesehene erste Ringnut (10) und eine zweite Ringnut (11) aufweist, wobei die erste Ringnut (10) eine erste Ringdichtung (12) umfasst, und wobei die zweite Ringnut (11) eine zweite Ringdichtung (13) umfasst, **dadurch gekennzeichnet, dass** die erste Ringdichtung (12) als O-Ring und die zweite Ringdichtung (13) als O-Ring ausgebildet sind, und dass die zweite Ringnut (11) an der zweiten Stirnseite (8b) und an der Schmalseite (8c) vorgesehen ist.

2. Dichtelement nach Anspruch 1, **dadurch gekennzeichnet, dass** das Trägerelement (7) scheibenförmig ausgebildet ist.

3. Dichtelement nach Anspruch 1 oder 2, **dadurch gekennzeichnet, dass** zwischen der Durchgangsbohrung (9) und der ersten Ringnut (10) ein Steg (16) vorgesehen ist, der plan an die erste Stirnseite (8a) anschließt.

4. Dichtelement nach einem der Ansprüche 1 bis 3, **dadurch gekennzeichnet, dass** der erste Nutgrund (1 0a) der ersten Ringnut (10) und der zweite Nutgrund (11a) der zweiten Ringnut (11) quer zur Axialrichtung (A) des Trägerelements zueinander versetzt angeordnet sind.

5. Dichtelement nach Anspruch 4, **dadurch gekennzeichnet, dass** die Summe der maximalen Höhen (h12, h13) der beiden Ringdichtungen (12, 13) größer gleich der axiale Längserstreckung (a7) des Trägerelements (7) ist.

6. Dichtelement nach einem der Ansprüche 1 bis 5, **dadurch gekennzeichnet, dass** das Trägerelement (7) einen, insbesondere korrosionsbeständigen, Metallwerkstoff aufweist.

7. Dichtelement nach einem der Ansprüche 1 bis 6, **dadurch gekennzeichnet, dass** die Ringnut (11) im Querschnitt unter einem spitzen Winkel (α) an eine Kante (19) der zweiten Stirnseite (8b) anschließt.

8. Dichtelement nach Anspruch 7, **dadurch gekennzeichnet, dass** der Winkel (α) von 30 bis 80 Grad beträgt.

9. Werkzeug, insbesondere Spritzgusswerkzeug, mit mindestens zwei Werkzeugbauteile (2, 3) und mit einer Kühlmittelverbindung (14) zwischen den beiden Werkzeugbauteilen (2, 3), **dadurch gekennzeichnet, dass** die Kühlmittelverbindung (14) ein Dichtelement nach einem der Ansprüche 1 bis 8 aufweist.

10. Verfahren zur Instandhaltung einer Kühlmittelverbindung (14) zwischen zwei Werkzeugbauteilen (2, 3), bei dem an einer zylindrischen Vertiefung (15) an einem Kühlmittelkanal (5) eines Werkzeugbauteils (3) ein Dichtelement nach einem der Ansprüche 1 bis 8 vorgesehen wird.

11. Verfahren nach Anspruch 10, bei dem am Werkzeugbauteil (3) die zylindrische Vertiefung (15), insbesondere mithilfe eines spanenden Trennverfahrens, vorgesehen wird.

## Claims

1. Sealing element for a coolant connection (14) between two tool components (2, 3) of a tool, more particularly an injection-molding tool, which sealing element (6) comprises a carrier element (7) which has two mutually opposite end faces (8a, 8b) and, between these end faces (8a, 8b), at least one narrow side (8c) on the outside, wherein the carrier element (7) comprises a through-bore (9) extending from its first to its second end face (8a, 8b) for the coolant connection (14) and at least one annular groove (10, 11) surrounding the through-bore (9), wherein at least one annular seal (12, 13) of the sealing element (6) is provided on the annular groove (10, 11), wherein the carrier element (7) is of annular shape in cross-section, and that the carrier element (7) has a first annular groove (10) provided on the first end face (8a) and a second annular groove (11), wherein the first annular groove (10) comprises a first annular seal (12), and wherein the second annular groove (11) comprises a second annular seal (13), **characterized in that** the first annular seal (12) is designed as an O-ring and the second annular seal (13) is designed as an O-ring, and **in that** the second annular groove (11) is provided on the second end face (8b) and on the narrow side (8c).

2. Sealing element according to claim 1, **characterized in that** the carrier element (7) is of disc-shaped design.

3. Sealing element according to claim 1 or 2, **characterized in that** a web (16) is provided between the through-bore (9) and the first annular groove (10), which web adjoins the first end face (8a) in a planar manner.

4. Sealing element according to one of claims 1 to 3, **characterized in that** the first groove base (10a) of the first annular groove (10) and the second groove base (11a) of the second annular groove (11) are arranged offset relative to one another transversely to the axial direction (A) of the carrier element.

5. Sealing element according to claim 4, **characterized in that** the sum of the maximum heights (h12, h13) of the two annular seals (12, 13) is greater than or equal to the axial longitudinal extension (a7) of the carrier element (7).

6. Sealing element according to one of claims 1 to 5, **characterized in that** the carrier element (7) has a, more particularly corrosion-resistant, metal material.

7. Sealing element according to one of claims 1 to 6, **characterized in that** the annular groove (11) adjoins an edge (19) of the second end face (8b) at an acute angle (α) in cross-section.

8. Sealing element according to claim 7, **characterized in that** the angle (α) is from 30 to 80 degrees.

9. Tool, more particularly injection-molding tool, having at least two tool components (2, 3) and having a coolant connection (14) between the two tool components (2, 3), **characterized in that** the coolant connection (14) has a sealing element according to one of claims 1 to 8.

10. Method for maintaining a coolant connection (14) between two tool components (2, 3), in which a sealing element according to one of claims 1 to 8 is provided at a cylindrical recess (15) on a coolant channel (5) of a tool component (3).

11. Method according to claim 10, in which the cylindrical recess (15) is provided on the tool component (3), more particularly with the aid of a metal-cutting separation process.

## Revendications

1. Élément d'étanchéité pour une circulation de réfrigérant (14) entre deux composants (2, 3) d'un outil, en particulier d'un outil de moulage par injection, lequel élément d'étanchéité (6) comprend un élément de support (7) présentant deux faces frontales (8a, 8b) opposées et au moins un petit côté (8c) extérieur entre ces faces frontales (8a, 8b), l'élément de support (7) présentant un trou traversant (9) de la première à la deuxième face frontale (8a, 8b) pour la circulation de réfrigérant (14) et au moins une gorge annulaire (10, 11) entourant le trou traversant (9), au moins un joint annulaire (12, 13) de l'élément d'étanchéité (6) étant prévu sur l'élément de support (7) sur la gorge annulaire (10, 11), l'élément de support (7) ayant une forme d'anneau circulaire en section, et l'élément de support (7) présentant une première gorge annulaire (10) prévue sur la première face frontale (8a) et une deuxième gorge annulaire (11), la première gorge annulaire (10) comportant un premier joint annulaire (12), et la deuxième gorge annulaire (11) comportant un deuxième joint annulaire (13), **caractérisé en ce que** le premier joint annulaire (12) est conformé comme un joint torique et le deuxième joint annulaire (13) comme un joint torique et **en ce que** la deuxième gorge annulaire (11) est prévue sur la deuxième face frontale (8b) et sur le petit côté (8c).

2. Élément d'étanchéité selon la revendication 1, **caractérisé en ce que** l'élément de support (7) est en forme de disque.

3. Élément d'étanchéité selon la revendication 1 ou 2, **caractérisé en ce qu'**une barrette (16) se raccordant en affleurement sur la première face d'extrémité (8a) est prévue entre le trou traversant (9) et la première gorge annulaire (10).

4. Élément d'étanchéité selon l'une des revendications 1 à 3, **caractérisé en ce que** le premier fond de gorge (10a) de la première gorge annulaire (10) et le deuxième fond de gorge (11a) de la deuxième gorge annulaire (11) sont décalés l'un par rapport à l'autre transversalement par rapport à la direction axiale (A) de l'élément de support.

5. Élément d'étanchéité selon la revendication 4, **caractérisé en ce que** la somme des hauteurs maximales (h12, h13) des deux joints annulaires (12, 13) est supérieure ou égale à l'étendue axiale (a7) de l'élément de support (7).

6. Élément d'étanchéité selon l'une des revendications 1 à 5, **caractérisé en ce que** l'élément de support (7) comporte un matériau métallique, en particulier résistant à la corrosion.

7. Élément d'étanchéité selon l'une des revendications 1 à 6, **caractérisé en ce que** la gorge annulaire (11) se raccorde sur une arête (19) de la deuxième face frontale (8b) en formant en section un angle (α) aigu.

8. Élément d'étanchéité selon la revendication 7, **caractérisé en ce que** l'angle (α) mesure de 30 à 80 degrés.

9. Outil, en particulier outil de moulage par injection, avec au moins deux composants d'outil (2, 3) et avec une circulation de réfrigérant (14) entre les deux composants d'outil (2, 3), **caractérisé en ce que** la circulation de réfrigérant (14) présente un élément d'étanchéité selon l'une des revendications 1 à 8.

10. Procédé pour la maintenance d'une circulation de réfrigérant (14) entre deux composants d'outil (2, 3), dans lequel un élément d'étanchéité selon l'une des revendications 1 à 8 est prévu dans un creux cylindrique (15) sur un canal de réfrigérant (5) d'un composant d'outil (3).

11. Procédé selon la revendication 10, dans lequel le creux cylindrique (15) est prévu sur le composant d'outil (3), en particulier à l'aide d'un procédé de découpe avec enlèvement de matière.
